# EUROPÄISCHE PATENTSCHRIFT

(11) **EP 2 492 236 B1**
(45) Veröffentlichungstag und Bekanntmachung des Hinweises auf die Patenterteilung: **26.08.2015**
(21) Anmeldenummer: 12000608.5
(22) Anmeldetag: 31.01.2012
(51) Int. Cl.: B66F 3/02, B66F 17/00, B23Q 5/38, B23Q 5/58, B65B 13/18

(54) **Hubvorrichtung mit Sicherheitseinrichtung**
Lifting device with safety device
Dispositif de levage doté d'un dispositif de sécurité

(30) Priorität: 23.02.2011 DE 102011012207
(43) Veröffentlichungstag der Anmeldung: 29.08.2012
(73) Patentinhaber: SPG Packaging Systems GmbH, 46535 Dinslaken (DE)
(72) Erfinder: Oehm, Torsten, 42369 Wuppertal (DE); Kastner, Hans Günther, 42489 Wülfrath (DE)
(74) Vertreter: Roche, von Westernhagen & Ehresmann

(56) Entgegenhaltungen:
- EP-A1- 1 355 074
- DE-U1- 29 805 196
- FR-A1- 2 710 361
- US-A- 4 076 104
- US-A1- 2006 144 653

## Beschreibung

Die Erfindung betrifft eine Hubvorrichtung mit einem Werkzeug, welches mittels eines Motors vertikal verfahrbar und mit zumindest einem ersten Zahnrad bewegungsgekoppelt ist, das über den vertikalen Verfahrweg hinweg in eine ortsfest angeordnete Zahnstange eingreift, wobei das Hubwerk eine Sicherungseinrichtung mit einem Blockadeelement aufweist, welches in einer Sperrstellung das Werkzeug zumindest in energielosem Zustand der Hubvorrichtung gegen eine Bewegung in Schwerkraftrichtung hält.

Hubwerke verschiedener Art sind aus dem druckschriftlich nicht belegbaren Stand der Technik in verschiedenen Ausführungsformen und für verschiedene Zwecke hinlänglich bekannt.

Hubwerke werden unter anderem bei sogenannten Umreifungsmaschinen eingesetzt. Mit solchen Umreifungsmaschinen wird Packgut, beispielsweise Zeitungen oder Wellpappe, in Stapeln mit einem Band umreift, um einen sicheren Transport gewährleisten zu können. So entwickelt und vertreibt die Anmelderin beispielsweise Umreifungsmaschinen für Wellpappe, die einen Packtisch aufweisen, an welchem zueinander beabstandet und parallel zueinander ausgerichtet zwei vertikale Stützen angeordnet sind. An den Stützen ist eine Vertikalführung für eine sogenannte Pressplatte angeordnet, die jeweils eine Zahnstange umfasst. Die Pressplatte selbst verfügt über wenigstens einen Motor, der über eine Achse mit den Zahnstangen zusammenwirkende Zahnräder antreibt. Auf diese Weise ist die Pressplatte vertikal verfahrbar und kann vor dem eigentlichen Umreifungsvorgang einen Wellpappenstapel komprimieren, um ein günstigeres Packvolumen zu gewährleisten. Das erfindungsgemäße Hubwerk wird beim Beispiel der Umreifungsmaschine folglich durch Motor, Zahnrad, Zahnstange und Werkzeug gebildet.

Zu Wartungszwecken oder Störungsbeseitigung kann es vorkommen, dass Personen in den Gefahrenbereich unter das Werkzeug des Hubwerks, im Beispiel die Pressplatte, treten müssen. Für diesen Fall ist eine zweifache Sicherungseinrichtung vorgesehen. Zunächst wird die Anlage energielos geschaltet, also die Stromzufuhr unterbrochen. Infolgedessen ist die Anlage funktionslos und kann von einer weiteren Person nicht fehlerhaft in Gang gesetzt werden. Anlagen mit Hubwerken verfügen darüber hinaus in aller Regel über eine zweite, mechanische Sicherheitseinrichtung, die ein Absinken des Werkzeuges, im Beispiel der Pressplatte, im energielosen Zustand der Anlage verhindert.

Die Erfindung kann unter anderem auch in elektrisch betriebenen Pressen eingesetzt werden, bei welchen der Pressbalken entlang einer Zahnstange vertikal verfahren wird.

Solche Sicherheitseinrichtungen können in den Verfahrweg des Werkzeuges eingebrachte Bolzen sein, die eine Bewegung verhindern. Alternativ weisen Anlagen Zahnleisten auf, in welche Klinken zur Sicherung gegen eine unbeabsichtigte Vertikalbewegung eingreifen. Schließlich ist es unter anderem auch bei Umreifungsmaschinen mit dem eingangs genannten Aufbau bekannt, durch eine Person in die für die Vertikalbewegung notwendige Zahnstange unterhalb des Zahnrades einen Zahnstangenabschnitt derart einzusetzen, dass die Zähne von Zahnstangenabschnitt und Zahnstange kämmend ineinander greifen. Auf diese Weise wird die Bewegungsbahn des Zahnrades entlang der Zahnstange blockiert. Eine ungewollte Abwärtsbewegung des Werkzeuges ist so wirksam verhindert.

Die Sicherheitseinrichtungen im Stand der Technik haben entscheidende Nachteile. So erlauben Zahnleisten mit eingreifenden Klingen bzw. Sicherungsbolzen in der Regel lediglich eine Blockade des Werkzeuges in bestimmten Höhen. Das Werkzeug lässt sich folglich lediglich in bestimmten Stufen halten.

Eine nahezu stufenlose Sicherung des Werkzeuges ist zwar mit der zuletzt genannten Sicherungseinrichtung mittels Zahnstangenabschnitt gewährleistet, hierbei muss sich eine Person jedoch vor der Sicherung bereits in den Gefahrenbereich des Werkzeugs begeben.

Aus dem Stand der Technik sind zudem Hubvorrichtungen bekannt, bei welchen dem Antriebsmotor oder einer Hilfswelle zugeordnete Bremseinheiten vorgesehen sind. So ist beispielsweise aus der US 2006/0144653 A1 je eine reibschlüssige Bremseinheit für das Antriebszahnrad und für ein Bremszahnrad offenbart. Die FR 2 710 361 offenbart bei einer Fassadenhubvorrichtung, bei welcher überhaupt kein Werkzeug offenbart ist, eine Wirbelstrombremse, welche die Rotation der Antriebswelle oder einer Hilfswelle abbremsen kann. Die EP 1 355 074 A1 zeigt eine Bremseinheit mit Reibbacken, welche die Welle eines Hilfszahnrades in ihrer Rotation abbremsen kann. Derartige Bremseinheiten sind jedoch aufwendig in der Wartung und benötigen in der Regel einen großen Bauraum.

Aufgabe der Erfindung ist es, eine Sicherungseinrichtung für Hubwerke, insbesondere bei Umreifungsmaschinen zu schaffen, welche eine Blockade des Werkzeuges in jeder Position des vertikalen Verfahrweges gestattet, ohne dass eine Person hierzu in den Gefahrenbereich des Werkzeugs treten muss.

Gelöst wird die Aufgabe von einer Hubvorrichtung gemäß Anspruch 1 sowie eine Umreifungsmaschine gemäß Anspruch 7, insbesondere mit den kennzeichnenden Merkmalen, wonach das Blockadeelement von einem zweiten Zahnrad gebildet ist und bei Vertikalbewegung des Werkzeugs entgegen einer Rückstellkraft in einer blockadefreien Stellung gehalten ist und die Rückstellkraft das zweite Zahnrad zumindest in energielosem Zustand der Hubvorrichtung in seine Sperrstellung drängt, wobei das zweite Zahnrad in das erste Zahnrad eingreift und in Folge dessen eine zur Drehrichtung des ersten Zahnrades entgegengerichtete Drehbewegung vollzieht, und wobei das zweite Zahnrad an einem Koppelteil angeordnet ist, welches einen Eingriff des zweiten Zahnrades in die Zahnstange bei einer Vertikalbewegung des Werkzeugs verhindert, das zweite Zahnrad bei aktivierter Sicherheitseinrichtung jedoch in Eingriff mit der Zahnstange bringt.

Der wesentliche Vorteil der Erfindung liegt zunächst darin, dass das Werkzeug in nahezu jeder Vertikalposition gesichert werden kann. Dies erleichtert Service- und Wartungsarbeiten am Werkzeug erheblich. Das Werkzeug kann je nach Wartungsarbeit und erforderlicher Arbeitsergonomie in der günstigsten Position gesichert sein. Darüber hinaus wird die Sicherungseinrichtung aktiviert, sobald die Hubvorrichtung energielos ist. Im Betriebszustand wird das Blockadeelement aktiv gegen eine Rückstellkraft in einer die Vertikalbewegung gestattenden Stellung gehalten. In energielosem Zustand sorgt die Rückstellkraft dafür, dass das Blockadeelement selbsttätig in die Sperrstellung rückt und das Werkzeug gegen eine Bewegung in Schwerkraftrichtung sichert. Insoweit muss keine Person zur Sicherung des Werkzeugs in den Gefahrenbereich treten.

Bei einer bevorzugten Ausführungsform kennzeichnet sich die Hubvorrichtung dadurch, dass das erste Zahnrad Teil der Sicherungseinrichtung ist und das Blockadeelement in Sperrstellung mit dem ersten Zahnrad zusammenwirkt.

Durch die Nutzung des ersten Zahnrades als Teil der Sicherungseinrichtung, welches üblicherweise auch das Antriebszahnrad ist, lässt sich die Sicherungseinrichtung vom Aufbau her besonders einfach gestalten.

Bevorzugt ist weiterhin eine Ausführungsform, bei welcher das erste Zahnrad mit dem Blockadeelement sowohl in Sperrstellung als auch bei einer Vertikalbewegung des Werkzeugs in Eingriff steht.

Durch den permanenten Eingriff des Blockadeelementes in das erste Zahnrad lässt sich die Sicherungseinrichtung mit einer ausgesprochen kurzen Latenzzeit aktivieren.

Durch den vorgenannten Aufbau der Sicherungseinrichtung macht sich die Erfindung den einfachen, aber sehr wirkungsvollen mechanischen Zusammenhang zwischen ineinander eingreifenden Zähnrädern zunutzte. Hierbei drehen unmittelbar ineinander eingreifende Zahnräder gegensinnig. Wenn nun beide Zahnräder in ein und dieselbe Zahnstange eingreifen, ist jede Bewegung blockiert. Insoweit ist die so ausgestaltete Sicherungseinrichtung ausgesprochen einfach, aber ebenso wirkungsvoll ausgestaltet, was die erforderliche Funktionssicherheit gewährleistet.

Das Koppelteil ist dabei bevorzugter Weise als Hebel ausgebildet, mittels dessen das zweite, als Blockadeelement dienende Zahnrad außer Eingriff mit der Zahnstange gehalten wird.

Weitere Ausführungsformen der Erfindung sind in den übrigen Unteransprüchen definiert. Im Übrigen wird die Erfindung anhand des nachfolgenden Ausführungsbeispieles unter Verweis auf die beiliegenden Zeichnungen dargestellt. Es zeigen:

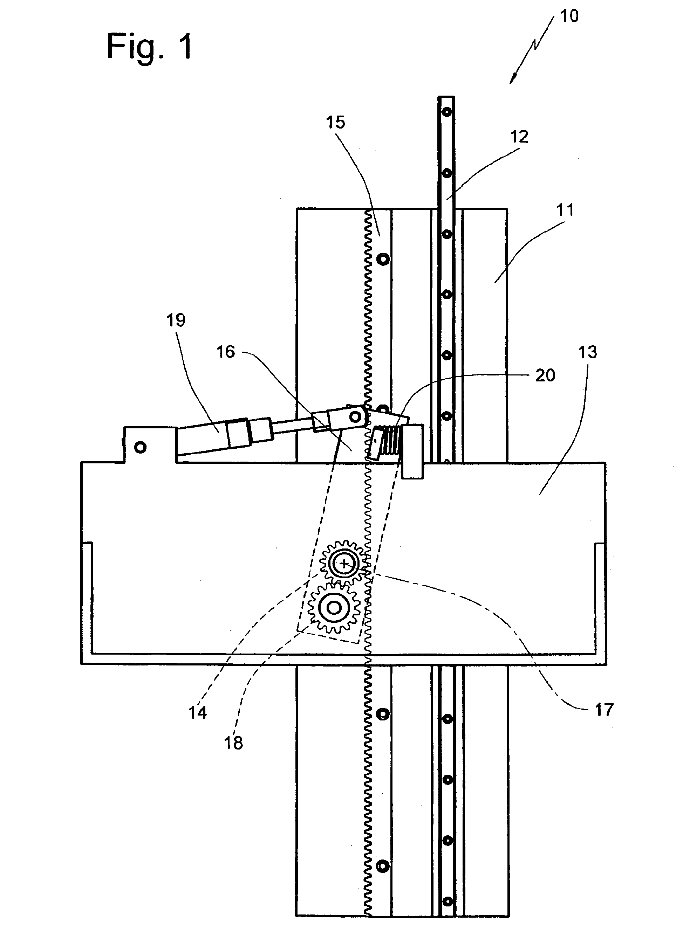

- Fig. 1: ein vertikaler Teilschnitt durch eine erfindungsgemäße Hubvorrichtung;
- Fig. 2:: Seitenansicht auf die Sicherungseinrichtung in Freilaufstellung;
- Fig. 3:: Darstellung gemäß Fig. 1 in Sperrstellung.

In den Darstellungen ist eine Hubvorrichtung insgesamt mit der Bezugsziffer 10 bezeichnet.

Die Hubvorrichtung 10 umfasst zunächst eine Stütze 11, an welcher eine Führungsleiste 12 angebracht ist. Entlang der Führungsleiste 12 ist das Werkzeug 13 mittels eines Antriebes vertikal auf- und abbewegbar.

Der Antrieb, welcher hier nicht dargestellt ist, wirkt auf ein erstes Zahnrad 14, welches in eine vertikal und parallel zur Führungsleiste 12 angeordnete Zahnstange 15 eingreift, die an der Stütze 11 angeordnet ist.

Die Sicherheitseinrichtung der Hubvorrichtung 10 umfasst zunächst ein Koppelteil 16, welches im Weiteren auch als Schwenkhebel 16 bezeichnet wird. Der Schwenkhebel 16 weist eine Schwenkachse 17 auf, die mit der Achse des ersten Zahnrades 14 zusammenfällt. Am Schwenkhebel 16 ist ein zweites Zahnrad 18 drehbeweglich angeordnet und greift in das erste Zahnrad 14 ein. Das zweite Zahnrad 18 bildet das Blockadeelement und ist im Folgenden deswegen auch als solches benannt.

Gegenüberliegend des Blockadeelementes 18 greift eine Verstelleinrichtung 19 in Form eines Pneumatikzylinders an. Gegengelagert ist der Pneumatikzylinder 19 am Werkzeug 13 selbst. Im Bereich der Anordnung des Zylinders 19 am Schwenkhebel 16 befindet sich darüber hinaus ein ebenfalls am Werkzeug 13 widergelagertes Elastikelement 20 in Form einer Druckfeder. Die Druckfeder 20 übt eine Rückstellkraft auf den Schwenkhebel 16 aus und kann den Schwenkhebel 16 gegen die Wirkung des Pneumatikzylinders 19 in eine Sperrstellung bewegen. In der Sperrstellung greift das zweite Zahnrad 18 zeitgleich mit dem ersten Zahnrad 14 in die Zahnstange 15 ein.

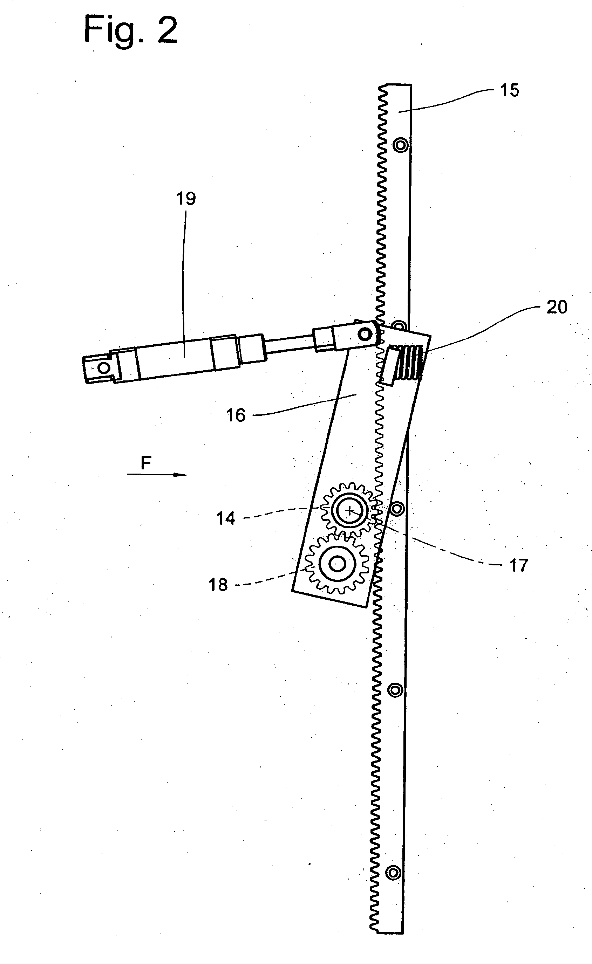

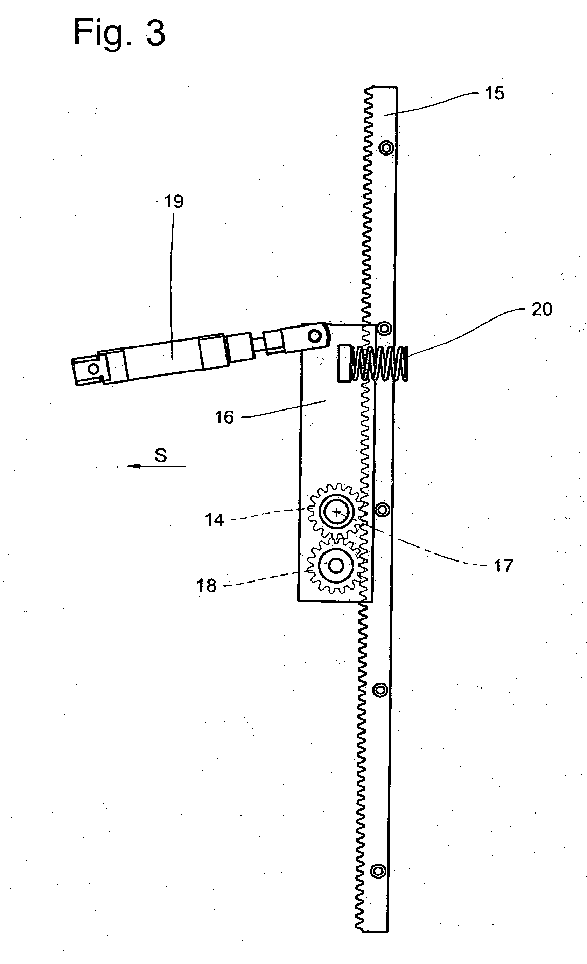

Die Funktion der Sicherungseinrichtung wird nunmehr anhand der Figuren 2 und 3 beschrieben. Diese zeigen lediglich die wesentlichen Bauteile der Sicherungseinrichtung unter Weglassung insbesondere des Werkzeugs 13, der Stütze 11 sowie der Führungsleiste 12.

In Fig. 2 ist die Sicherungseinrichtung in ihrer Freigangstellung dargestellt. Hierbei wirkt der Pneumatikzylinder 19 aktiv gegen die Rückstellkraft der Druckfeder 20 und bewegt den Schwenkhebel in Pfeilrichtung F. Um den Pneumatikzylinder aktiv zu verstellen, ist Druckluft notwendig, die über einen Kompressor erzeugt wird. Der Kompressor ist an die Hauptstromversorgung der Anlage angeschlossen. Über einen Elektromotor wird das erste Zahnrad 14 in Drehung versetzt, weshalb das nicht dargestellt Werkzeug 13 je nach Drehrichtung auf- oder abbewegt werden kann. Das in das erste Zahnrad 14 eingreifende zweite Zahnrad 18 dreht sich gegensinnig zum ersten Zahnrad 14. Die Zähnräder 14 und 18 sind permanent in gegenseitigem Eingriff.

Wird die Hauptstromzufuhr der Hubvorrichtung 10 beispielsweise zu Wartungs- und Servicezwecken unterbrochen, wird die Luftzufuhr in den Pneumatikzylindern 19 gekappt. Infolge dessen drängt die Druckfeder 20 den Pneumatikzylinder 19 in Richtung S zurück und schwenkt den Schwenkhebel 16 um seine Schwenkachse 17. Dabei greift am Ende der Schwenkbewegung das zweite Zahnrad 18 als Blockadeelement gleichzeitig in die Zahnstange 15 wie auch in das Zahnrad 14 ein. Aufgrund der gegensinnigen Zahnradbewegung bei gleichzeitigem Eingriff in die Zahnstange 15 wird jede Vertikalbewegung des Werkzeuges zuverlässig behindert. Sobald die Hauptstromzufuhr wieder aktiviert wird, kann der Pneumatikzylinder mit Druck beaufschlagt werden und die Sicherungseinrichtung in Freigangstellung bewegen.

Die Reaktionszeit zwischen dem Unterbrechen der Stromzufuhr der Hubvorrichtung 10 und dem Erreichen der Sperrstellung des Blockadeelementes 18 ist von den Einsatzbedingungen abhängig. Theoretisch ist ein nahezu verzögerungsfreies Einrücken des Blockadeelementes 18 denkbar, beispielsweise bei Pressplatten von Umreifungsmaschinen jedoch unerwünscht. Die bewegten Massen und steuerungstechnische Vorgaben erfordern hier einen Zeitverzug zwischen dem Abschalten der Hauptstromzufuhr und dem Einrücken des Blockadeelementes 18, damit die Pressplatte zunächst zum Stillstand kommen kann. Anderenfalls drocht eine Beschädigung der Antriebskomponenten.

Alternative Verstelleinrichtungen 19 wie beispielsweise Hydraulikzylinder, Spindeln, Hubmagnete oder Servomotoren sind denkbar. Auch ist die Druckfeder 20 bzw. ein Elastikelement 20 durchaus anders anordenbar.

Zusammenfassend stellt die Erfindung eine Sicherungseinrichtung für Hubwerke bereit, die in nahezu jeder Vertikalposition ein Werkzeug gegen Bewegung im Service- oder Wartungsfall sichern kann und dabei einfach aufgebaut ist.

Die Erfindung ist demnach umgesetzt in einer

Umreifungsmaschine mit einem Packtisch sowie zwei parallel zueinander mit Abstand am Packtisch angeordneten Stützen, die mit Zahnstangen versehen sind, in welche Zahnräder einer Pressplatte eingreifen, die mittels eines Motors vertikal verfahrbar ist, wobei eine Sicherheitseinrichtung mit einem Blockadeelement vorgesehen ist, das in einer Sperrstellung eine der Schwerkraft folgende Vertikalbewegung der Pressplatte zumindest in energielosem Zustand der Umreifungsmaschine verhindert, dadurch gekennzeichnet, dass das Blockadeelement die Pressplatte im Wesentlichen stufenlos in jeder Vertikalposition halten kann.

Das Blockadeelement ist gegen eine Rückstellkraft in einer die Vertikalbewegung gestattenden Position gehalten ist, in energielosem Zustand der Umreifungsmaschine ist das Blockadeelement durch die Rückstellkraft in seiner Sperrstellung gehalten.

Das Blockadeelement ist von einem zusätzlichen Zahnrad gebildet. Das zusätzliche Zahnrad steht in permanentem Eingriff mit dem zumindest einen Zahnrad der Pressplatte. In seiner Sperrstellung greift das zusätzliche Zahnrad gleichzeitig ein eines der Zahnräder der Pressplatte und die Zahnstange ein.

### Bezugszeichenliste

- 10: Hubvorrichtung
- 11: Stütze
- 12: Führungsleiste
- 13: Werkzeug
- 14: erstes Zahnrad
- 15: Zahnstange
- 16: Koppelteil/Schwenkhebel
- 17: Schwenkachse
- 18: zweites Zahnrad/Blockadeelement
- 19: Verstelleinrichtung/Zylinder
- 20: Elastikelement/Druckfeder

- F: Richtung
- S: Richtung

## Patentansprüche

1. Hubvorrichtung 10 mit einem Werkzeug 13, welches mittels eines Motors vertikal verfahrbar und mit zumindest einem ersten Zahnrad 14 bewegungsgekoppelt ist, das über den vertikalen Verfahrweg hinweg in eine ortsfest angeordnete Zahnstange 15 eingreift, wobei die Hubvorrichtung 10 eine Sicherungseinrichtung mit einem Blockadeelement aufweist, welches in einer Sperrstellung das Werkzeug 13 zumindest in energielosem Zustand der Hubvorrichtung 10 gegen eine Bewegung in Schwerkraftrichtung hält, und wobei das Blockadeelement das Werkzeug 13 über den vertikalen Verfahrweg hinweg im Wesentlichen stufenlos in jeder Vertikalposition hält, **dadurch gekennzeichnet, dass** das Blockadeelement von einem zweiten Zahnrad 18 gebildet ist und bei Vertikalbewegung des Werkzeugs 13 entgegen einer Rückstellkraft, in einer blockadefreien Stellung gehalten ist und die Rückstellkraft das zweite Zahnrad 18 zumindest in energielosem Zustand der Hubvorrichtung 10 in seine Sperrstellung drängt, wobei das zweite Zahnrad 18 in das erste Zahnrad 14 eingreift und in Folge dessen eine zur Drehrichtung des ersten Zahnrades 14 entgegengerichtete Drehbewegung vollzieht, und wobei das zweite Zahnrad 18 an einem Koppelteil 16 angeordnet ist, welches einen Eingriff des zweiten Zahnrades 18 in die Zahnstange 15 bei einer Vertikalbewegung des Werkzeugs 13 verhindert, das zweite Zahnrad 18 bei aktivierter Sicherheitseinrichtung jedoch in Eingriff mit der Zahnstange 15 bringt.

2. Hubvorrichtung nach Anspruch 1, **dadurch gekennzeichnet, dass** das erste Zahnrad 14 Teil der Sicherungseinrichtung ist und das Blockadeelement 18 in Sperrstellung mit dem ersten Zahnrad 14 zusammenwirkt.

3. Hubvorrichtung nach Anspruch 1 oder 2, **dadurch gekennzeichnet, dass** das erste Zahnrad 14 mit dem Blockadeelement 18 sowohl in Sperrstellung als auch bei einer Vertikalbewegung des Werkzeugs 13 in Eingriff steht.

4. Hubvorrichtung nach einem der vorhergehenden Ansprüche, **dadurch gekennzeichnet, dass** das zweite Zahnrad 18 entgegen einer Rückstellkraft hinsichtlich der Zahnstange 15 eingriffslos gehalten ist.

5. Hubvorrichtung nach einem der Ansprüche 1 bis 4, **dadurch gekennzeichnet, dass** das zweite Zahnrad 18 in der Sperrstellung gleichzeitig in Eingriff mit der Zahnstange 15 wie dem ersten Zahnrad 14 steht.

6. Hubvorrichtung nach einem der vorhergehenden Ansprüche, **dadurch gekennzeichnet, dass** das erste Zahnrad 14 das Antriebszahnrad bildet, mittels dessen das Werkzeug 13 vertikal verfahrbar ist.

7. Umreifungsmaschine mit einer Hubvorrichtung 10 nach einem der vorhergehenden Ansprüche.

## Claims

1. Lifting device 10 having a tool 13 which is vertically displaceable by means of a motor and is motionally coupled to at least one first gear wheel 14 which across the vertical displacement path engages in a rack 15 which is disposed so as to be locationally fixed, wherein the lifting device 10 has a safety installing having a locking element which in a locked position at least in a non-energized state of the lifting device 10 retains the tool 13 counter to a movement in the direction of gravity, and wherein the locking element across the vertical displacement path retains the tool 13 in a substantially stepless manner in any vertical position, **characterized in that** the locking element is formed by a second gear wheel 18 and in the event of a vertical movement of the tool 13 is retained counter to a restoring force in an unlocked position and the restoring force at least in a non-energized state of the lifting device 10 forces the second gear wheel 18 into the locked position thereof, wherein the second gear wheel 18 engages in the first gear wheel 14 and consequently performs a rotation movement which is counter to the rotation movement of the first gear wheel 14, and wherein the second gear wheel 18 is disposed on a coupling part 16 which in the event of a vertical movement of the tool 13 prevents engagement of the second gear wheel 18 in the rack 15 but in the event of the safety installation being activated causes the second gear wheel 18 to engage in the rack 15.

2. Lifting device according to Claim 1, **characterized in that** the first gear wheel 14 is part of the safety installation and the locking element 18 in the locked position interacts with the first gear wheel 14.

3. Lifting device according to Claim 1 or 2, **characterized in that** the first gear wheel 14 engages in the locking element 18, both in the locked position as well as in the event of a vertical movement of the tool 13.

4. Lifting device according to one of the preceding claims, **characterized in that** the second gear wheel 18 in relation to the rack 15 is retained without engagement so as to be counter to a restoring force.

5. Lifting device according to one of Claims 1 to 4, **characterized in that** in the locked position the second gear wheel 18 simultaneously engages in the rack 15 as well as the first gear wheel 14.

6. Lifting device according to one of the preceding claims, **characterized in that** the first gear wheel 14 forms the drive gear wheel by means of which the tool 13 is vertically displaceable.

7. Strapping machine having a lifting device 10 according to one of the preceding claims.

## Revendications

1. Dispositif de levage 10 comprenant un outil 13 qui peut être déplacé verticalement au moyen d'un moteur et qui est accouplé en mouvement à au moins une première roue dentée 14 qui, au-delà de la course de déplacement vertical, s'engage dans une crémaillère 15 disposée fixement, le dispositif de levage 10 présentant un système de sécurité avec un élément de blocage qui, dans une position de verrouillage, retient l'outil 13 au moins dans l'état non alimenté en puissance du dispositif de levage 10 à l'encontre d'un déplacement dans le sens de la force de pesanteur, et l'élément de blocage retenant l'outil 13 au-delà de la course de déplacement vertical essentiellement de manière continue dans chaque position verticale, **caractérisé en ce que** l'élément de blocage est formé par une deuxième roue dentée 18 et est retenu dans une position non bloquée lors du déplacement vertical de l'outil 13 à l'encontre d'une force de rappel et la force de rappel pousse la deuxième roue dentée 18 dans sa position de verrouillage au moins dans l'état non alimenté en puissance du dispositif de levage 10, la deuxième roue dentée 18 venant en prise dans la première roue dentée 14 et de ce fait un mouvement de rotation se déroulant en sens inverse du sens de rotation de la première roue dentée 14, et la deuxième roue dentée 18 étant disposée au niveau d'une partie d'accouplement 16 qui empêche un engagement de la deuxième roue dentée 18 dans la crémaillère 15 dans le cas d'un déplacement vertical de l'outil 13, mais qui toutefois amène la deuxième roue dentée 18 en prise avec la crémaillère 15 lorsque le système de sécurité est activé.

2. Dispositif de levage selon la revendication 1, **caractérisé en ce que** la première roue dentée 14 fait partie du système de sécurité et l'élément de blocage 18, dans la position de verrouillage, coopère avec la première roue dentée 14.

3. Dispositif de levage selon la revendication 1 ou 2, **caractérisé en ce que** la première roue dentée 14 est en prise avec l'élément de blocage 18 à la fois dans la position de verrouillage et dans le cas d'un déplacement vertical de l'outil 13.

4. Dispositif de levage selon l'une quelconque des revendications précédentes, **caractérisé en ce que** la deuxième roue dentée 18 est retenue sans engagement vis-à-vis de la crémaillère 15 à l'encontre d'une force de rappel.

5. Dispositif de levage selon l'une quelconque des revendications 1 à 4, **caractérisé en ce que** la deuxième roue dentée 18, dans la position de verrouillage, est simultanément en prise avec la crémaillère 15 et avec la première roue dentée 14.

6. Dispositif de levage selon l'une quelconque des revendications précédentes, **caractérisé en ce que** la première roue dentée 14 forme la roue dentée d'entraînement au moyen de laquelle l'outil 13 peut être déplacé verticalement.

7. Machine de cerclage comprenant un dispositif de levage 10 selon l'une quelconque des revendications précédentes.
